# EUROPEAN PATENT SPECIFICATION

(11) **EP 3 421 172 B1**
(45) Date of publication and mention of the grant of the patent: **19.02.2020**
(21) Application number: 16891506.4
(22) Date of filing: 26.02.2016
(51) Int. Cl.: B23P 19/04, B23P 19/06, B25J 9/16, B25J 13/00, B25J 19/02, B23P 19/10, B23P 19/12

(54) **ROBOT ARM CONTROL SYSTEM**
ROBOTERARMSTEUERUNGSSYSTEM
SYSTÈME DE COMMANDE DE BRAS DE ROBOT

(43) Date of publication of application: 02.01.2019
(73) Proprietor: Fuji Corporation, Chiryu-shi, Aichi 472-8686 (JP)
(72) Inventor: FUJITA, Masatoshi, Chiryu, Aichi (JP)
(74) Representative: Grünecker Patent- und Rechtsanwälte PartG mbB
(86) International application number: PCT/JP2016/055767
(87) International publication number: WO 2017/145349

(56) References cited:
- JP-A- S6 056 830
- JP-A- H01 321 185
- JP-A- H09 141 577
- JP-A- 2010 125 553
- JP-A- 2012 071 400

## Description

### Technical Field

The present invention relates to a robotic arm control system, according to the preamble of claim 1. Such a robotic control system is known from JP 2012 071400 A.

### Background Art

Conventionally, an automatic screw fastening device has been disclosed. For example, Patent Document 1 discloses an automatic screw fastening device for manufacturing a liquid crystal module in which a frame-shaped bezel is fixed to a backlight unit of a liquid crystal panel by screws. Specifically, when the liquid crystal module is conveyed from a preceding process to the front of the automatic screw fastening device by a conveyor before the screws are fixed, a controller of the automatic screw fastening device recognizes the position of screw holes of the bezel, and has a screw fastening unit automatically fasten the screws of the bezel.

### Prior Art

### Patent Literature

Patent Document 1: Japanese Patent Application Laid-Open No. 2010-125553

### Summary of Invention

### Technical Problem

In such an automatic screw fastening device, if a part of the bezel of the liquid crystal module, before the screw is fixed, is lifted from the backlight, there may be a problem in automatically performing the screw fastening. In order to avoid such a problem, an operator may press the bezel of the liquid crystal module with a jig plate from above with a press machine.

In recent years, a large variety of products are often produced in small quantities. Therefore, the frequency at which an operator selects a jig plate suitable for the shape of the product to be screwed and attaches the jig plate to the press machine increases, which is one of the factors responsible for why the working efficiency of fastening screws has not improved sufficiently.

The present invention has been made in order to solve the above-mentioned problem, and its main object is to increase the working efficiency when various types of workpieces are pressed by a jig plate.

### Solution to Problem

The robotic arm control system of the present invention includes a first robotic arm and a second robotic arm for performing work on a workpiece having insertion portions at predetermined positions, an information reading unit for reading information about the workpiece or a workpiece type attached to a container on which the workpiece is placed, a jig plate seating unit for seating multiple types of jig plates, a storage unit for storing a correspondence relationship between workpiece type and jig plate type, and a controller for controlling the first robotic arm and the second robotic arm. The controller controls the first robotic arm to take out a jig plate corresponding to the workpiece type read by the information reading unit from the jig plate seating unit, to place the jig plate on the workpiece, and to press down on the workpiece with the jig plate so that positions of guide holes provided in the jig plate coincide with positions of the insertion portions of the workpiece; and the controller controls the second robotic arm to use the guide holes of the jig plate, pressing down on the workpiece, for inserting insertion members into the insertion portions.

In this robotic arm control system, the first robotic arm takes out the jig plate corresponding to the workpiece type from the jig plate seating unit, places the jig plate on the workpiece so that the positions of the guide holes provided in the jig plate coincide with the positions of the insertion holes of the workpiece, and presses down on the workpiece with the jig plate. Further, using the guide holes of the jig plate pressing down on the workpiece, the second robotic arm inserts the insertion members into the insertion portions. Therefore, even if there are many types of workpieces, the jig plate corresponding to the workpiece type can be automatically taken out. Further, even in the case in which a part of the workpiece is lifted, the lifting can be prevented by pressing down on the workpiece with a jig plate that is compatible with the workpiece. Consequently, working efficiency, when various types of workpieces are pressed down on with a jig plate, is improved.

Preferably, if the current jig plate type held by the first robotic arm does not correspond to the workpiece type read by the information reading unit, the controller may controls the first robotic arm to take out the jig plate corresponding to the workpiece type from the jig plate seating unit after returning the current jig plate to the jig plate seating unit. In this way, the jig plate can be automatically replaced with a jig plate corresponding to the type of the workpiece.

Preferably, the workpiece is a stacked body in which a first member having first fastening holes and a second member having second fastening holes are stacked so that the second fastening holes are disposed directly above the first fastening holes to constitute the insertion portions, the insertion members are fasteners, and the controller controls the second robotic arm to use the guide holes of the jig plate, pressing down on the workpiece, for guiding the fasteners to the second fastening holes and the first fastening holes so as to fasten the second member and the first member together with the fasteners. In this way, the second member can be fastened by the fastener in a state in which the second member is stacked on the first member. Further, since a part of the second member may be lifted up from the first member, the present invention is highly applicable. Here, the fasteners are screws, the first fastening holes are screw holes which the screws engage with, and the second fastening holes are screw insertion holes having a size such that a foot of each screw is inserted with play but a head of each screw cannot be inserted.

Preferably, the workpiece is conveyed to the work position of the first and second robotic arms by a conveyor and is worked on by the first and second robotic arms while on the conveyor. In this way, workpieces can be conveyed one after the other to the work position by the conveyor. Further, since it is not necessary to lift the workpieces, work efficiency increases.

### Brief Description of Drawings

[Fig. 1] FIG. 1 is a schematic illustration of a robotic arm control system 10.
[Fig. 2] FIG. 2 is a perspective view showing a portion of a workpiece 50 which is an example of a workpiece W.
[Fig. 3] FIG. 3 is a perspective view of a jig plate table 60 in which jig plates P are seated.
[Fig. 4] FIG. 4 is a process diagram of an operation in which a jig plate engaging unit 22 engages the jig plate P.
[Fig. 5] FIG. 5 is a flowchart of an automatic screw fastening process routine.
[Fig. 6] FIG. 6 is a process flow chart of the process of step S190.
[Fig. 7] FIG. 7 is a process flow chart of the process of step S200.

### Description of Embodiment

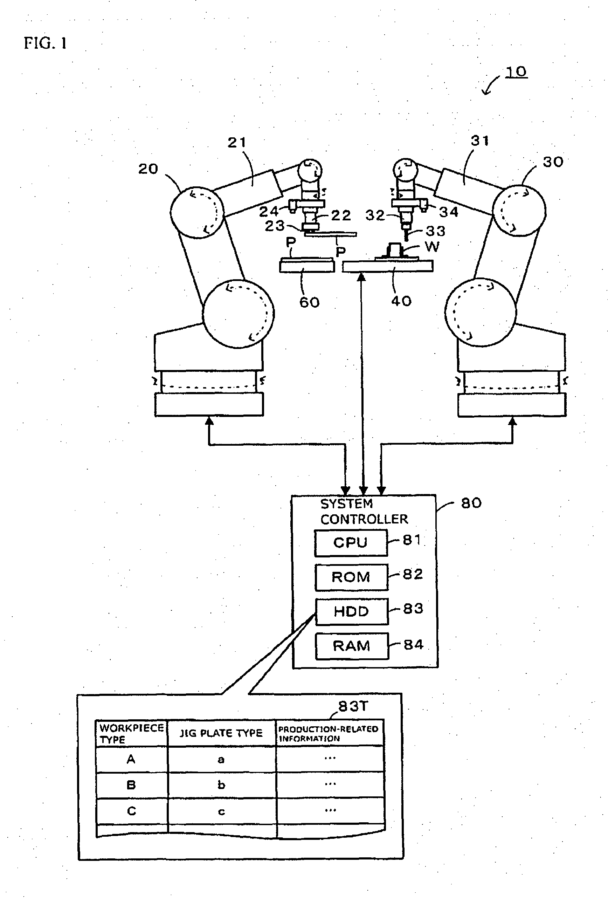

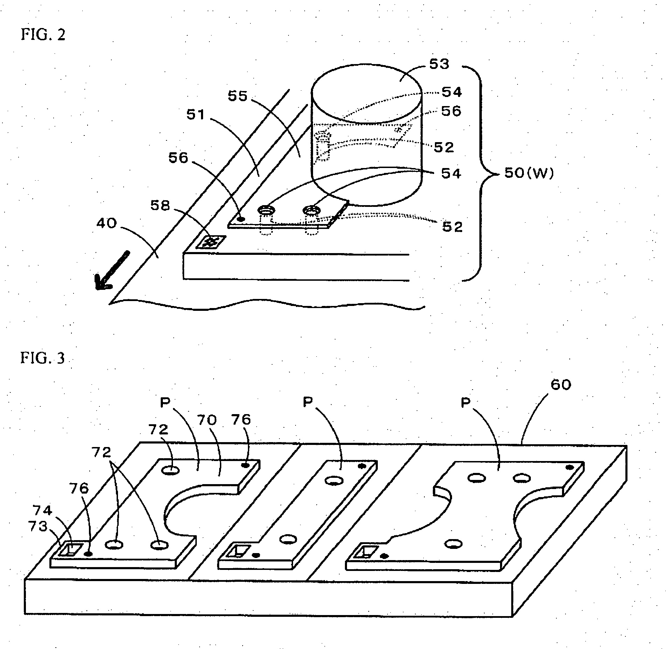

A preferred embodiment of the present invention is described below with reference to the drawings. FIG. 1 is a schematic illustration of a robotic arm control system 10, FIG. 2 is a perspective view showing a portion of a workpiece 50 which is an example of a workpiece W, and FIG. 3 is a perspective view of a jig plate table 60 in which jig plates P are seated.

The robotic arm control system 10 includes a first robot 20, a second robot 30, a workpiece conveying device 40, the jig plate table 60, and a system controller 80.

The first robot 20 includes a first arm 21, a jig plate engaging unit 22, and a first camera 24. The first arm 21 is a multi-axial robotic arm and is capable of horizontal rotation and vertical rotation in the directions of the arrows indicated by dashed-dotted lines shown in FIG. 1 for each axis. The jig plate engaging unit 22 is attached to the distal end of the first arm 21. The jig plate engaging unit 22 selects and engages one jig plate P from among multiple types of jig plates P seated on the jig plate table 60 and returns the held jig plate P to a predetermined seating position of the jig plate table 60. The jig plate engaging unit 22 is provided with a pair of fingers 23, 23. Each of the pair of fingers 23, 23 is a member extending in the vertical direction, and is horizontally moved in a direction approaching each other or horizontally moved in a direction separating from each other by a finger actuator (not shown). The first camera 24 is disposed adjacent to the jig plate engaging unit 22 so as to be capable of capturing an image of a region below the distal end of the arm. Operations of the first arm 21, the jig plate engaging unit 22, and the first camera 24 are controlled by the system controller 80.

The second robot 30 includes a second arm 31, a screw fastening unit 32, and a second camera 34. The second arm 31 is a multi-axial robotic arm and is capable of horizontal rotation and vertical rotation in the directions of the arrows indicated by dashed-dotted lines shown in FIG. 1. The screw fastening unit 32 is attached to the distal end of the second arm 31. The screw fastening unit 32 fastens screws into the workpiece W conveyed to the work position by the workpiece conveying device 40. The screw fastening unit 32 has a driver 33. The driver 33 is mounted so that the longitudinal direction of the driver 33 coincides with the vertical direction and is rotated in a screw fastening direction by a driver actuator (not shown). The driver 33 is configured to suck a screw to the tip of the driver 33 by a vacuum method. The second camera 34 is disposed adjacent to the screw fastening unit 32 to be able to photograph a region below the distal end of the second arm 31. Operation of the second arm 31, the screw fastening unit 32, and the second camera 34 are controlled by the system controller 80.

The workpiece conveying device 40 is a conveyor belt for carrying in the workpiece W to the work position of the first robot 20 and the second robot 30 and for carrying out the finished workpiece W from the work position, and thus conveys the workpiece W in a direction perpendicular to the paper surface in FIG. 1. Operation of the workpiece conveying device 40 is controlled by the system controller 80. The workpiece 50, which is an example of the workpiece W, is shown in FIG. 2. The workpiece 50 is a stacked body in which a substrate 51 having a plurality (three in this case) of screw holes 52 in an upper surface thereof and a cylindrical component 53 integrated with a plate-like bracket 55, having a plurality (three in this case) of screw insertion holes 54 in the vertical direction, are stacked together. The screw insertion holes 54 provided in the bracket 55 are disposed directly above the screw holes 52 of the substrate 51. The component 53 is attached to the substrate 51 by putting screws through the screw insertion holes 54 provided in the bracket 55 and screwing the screws into the screw holes 52 of the substrate 51. The bracket 55 has two reference marks 56 for alignment with the jig plate P. A two-dimensional bar code 58 is attached to a portion of the substrate 51 where the component 53 is not placed. The two-dimensional bar code 58 indicates the workpiece type. The workpiece W is basically a stacked body in which components with brackets are stacked on a substrate, as in the case of the workpiece 50, and the shapes and positions of the brackets, the number and positions of the screw insertion holes, the shapes of the components, the number and positions of the substrates, and the like are different for each type.

The jig plate table 60 accommodates multiple types of jig plates P. FIG. 3 shows an example in which the jig plate table 60 accommodates three types of jig plates P. Each jig plate P has a shape corresponding to the workpiece W type. Hereinafter, the jig plate 70 on the left side in FIG. 3 corresponding to the workpiece 50 in FIG. 2 will be described. The jig plate 70 is formed in the same shape as the bracket 55 of the workpiece 50 and is placed on the bracket 55 to press the bracket 55 against the substrate 51. The jig plate 70 has guide holes 72 at positions corresponding to the screw insertion holes 54 and the screw holes 52. The guide holes 72 are tapered holes that decrease in diameter downward. The diameter of the lower side of the guide holes 72 is slightly larger than the diameter of the head of the screw to be used. The jig plate 70 assists the insertion of the screws into the screw holes 52 via the screw insertion holes 54 using the guide holes 72. The screw insertion holes 54 are designed to have a size such that the foot of the screw is inserted with play but the head of the screw cannot be inserted. One corner of the jig plate 70 is provided with a tab 73, and the tab 73 is provided with a square hole 74 penetrating in the vertical direction. The jig plate engaging unit 22 of the first robot 20 engages the jig plate 70 by using the square hole 74. Multiple types of jig plates P are prepared corresponding to the workpiece W type, but the shape and size of the square hole is common to all workpiece W types. The positions on the jig plate table 60 at which each type of jig plate P is seated are fixed.

The system controller 80 is configured as a microprocessor built around a CPU 81 and includes ROM 82 for storing process programs, an HDD 83 for storing various data, RAM 84 used as workspace, and the like. The HDD 83 stores a correspondence table 83T shows the correspondence between workpiece type and jig plate type. For example, workpiece type A corresponds to jig plate type a, and workpiece type B corresponds to jig plate type b. In the correspondence table 83 T, production-related information (i.e., various positional coordinates of the jig plate P on the jig plate table 60 (i.e., positional information for square holes, guide holes, and reference marks, etc.), the type of screws to be used, the coordinates of the screw supplying position to which the screws are supplied, etc.) is also listed for each jig plate type.

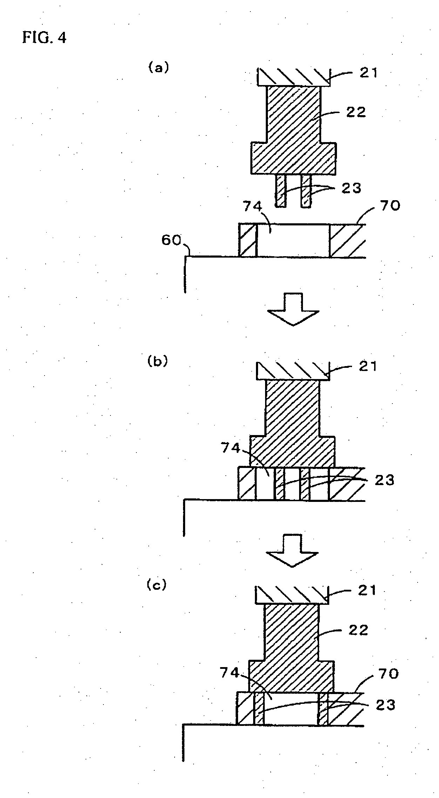

The action of the jig plate engaging unit 22 to engage the jig plate P will be described below with reference to FIG. 4. The jig plate 70 shown in FIG. 3 will be described as an example of the jig plate P. First, as shown in FIG. 4A, the system controller 80 has the first arm 21 dispose the pair of fingers 23 of the jig plate engaging unit 22 directly above the square hole 74 of the jig plate 70 seated on the jig plate table 60. At this time, the pair of fingers 23, 23 are brought close to each other, that is, in a closed state. Next, as shown in FIG. 4B, the system controller 80 has the first arm 21 insert the pair of fingers 23, 23 in the closed state into the square hole 74. The length of each finger 23 is the same as or slightly shorter than the depth of the square hole 74. Next, as shown in FIG. 4C, the system controller 80 has the jig plate engaging unit 22 horizontally move the pair of fingers 23, 23, inserted in the square hole 74, apart from each other. By doing so, the pair of fingers 23, 23 are opened and the outer surfaces of each finger 23 press against the inner wall surfaces of the square hole 74. As a result, the jig plate 70 is engaged by the pair of fingers 23, 23, and the first arm 21 engages the jig plate 70 and carries the jig plate 70 to a predetermined position in three-dimensional space. When returning the jig plate 70 to the jig plate table 60, the system controller 80 places the jig plate 70 at a predetermined seating position of the jig plate table 60, and then closes the pair of fingers 23, 23 to separate the outer surfaces of each finger 23 from the inner wall surfaces of the square hole 74, and then raises the pair of fingers 23, 23 to withdraw the finger 23, 23 from the square hole 74.

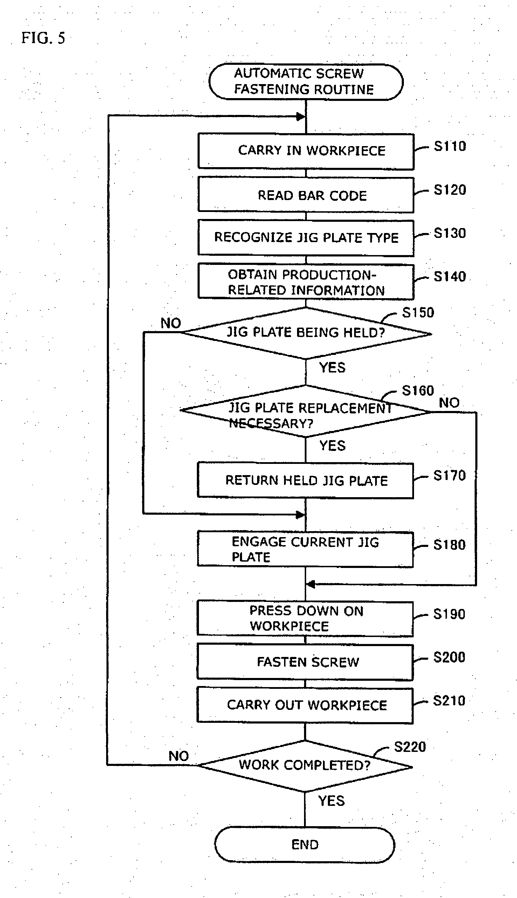

Next, an operation of the robotic arm control system 10 according to the present embodiment configured as described above, in particular, an automatic screw fastening routine will be described. A program for the automatic screw fastening process is stored in the ROM 82 of the controller 80. The CPU 81 of the system controller 80 reads and executes the program for the automatic screw fastening process from the ROM 82 when a start input for the automatic screw fastening process is entered by an operator. FIG. 5 is a flowchart for the automatic screw fastening processing routine.

The CPU 81 of the system controller 80 first has the workpiece conveying device 40 carry the workpiece W into the work position of the first robot 20 and second robot 30 as shown in FIG. 1 (step S110). Subsequently, the CPU 81 reads the two-dimensional bar code attached to the workpiece W (step S120). Specifically, the CPU 81 controls the first arm 21 and disposes the first camera 24 above the two-dimensional bar code of the workpiece W, and controls the first camera 24 to capture an image of the two-dimensional bar code. Subsequently, the CPU 81 recognizes the type of the jig plate (step S130). Specifically, the CPU 81 recognizes the type of the workpiece W from the captured two-dimensional bar code image, and recognizes the type of the jig plate P corresponding to the type of the workpiece W from the correspondence table 83T (refer to FIG. 1) stored in the HDD 83. Subsequently, the CPU 81 obtains production-related information corresponding to the jig plate type (step S140). Specifically, the CPU 81 reads the production-related information corresponding to the jig plate type recognized in step S130 from the correspondence table 83T and obtains the production-related information.

Subsequently, the CPU 81 determines whether or not the first arm 21 is currently holding the jig plate P (step S150), and if the first arm 21 is not holding the jig plate P, the CPU 81 has the first arm 21 engage the current jig plate P (step S180). Specifically, the CPU 81 arranges the pair of fingers 23 of the first arm 21 directly above the square hole of the jig plate P based on the various positional coordinates of the jig plate P on the jig plate table 60 this time from the production-related information recognized in step S140, and engages the jig plate P with the pair of fingers 23 according to the above-described engaging procedure (refer to FIG. 4). On the other hand, if the first arm 21 is holding the jig plate P in step S150, it is determined whether or not the jig plate P needs to be replaced (step S160). Specifically, the CPU 81 determines whether or not the type of the jig plate P currently held matches the type of the jig plate recognized in step S130. It is determined that replacement is not necessary if there is a match, and replacement is necessary if there is no match. If replacement of the jig plate P is required according to step S160, the CPU 81 returns the jig plate P held by the first arm 21 to the predetermined seating position on the jig plate table 60 (step S170), and then proceeds to step S180 to have the first arm 21 engage the current jig plate P.

After step S180 or if replacement of the jig plate P is not required in step 160, the CPU 81 presses the workpiece W with the jig plate P held by the first arm 21 (step S190). Subsequently, the CPU 81 has the second arm 31 and the screw fastening unit 32 screw the workpiece W (step S200).

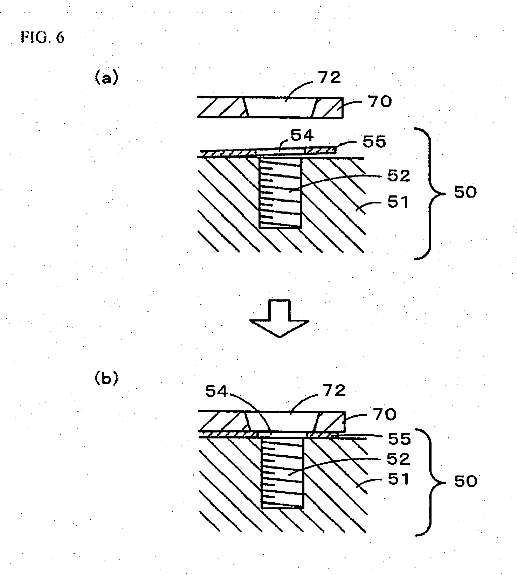

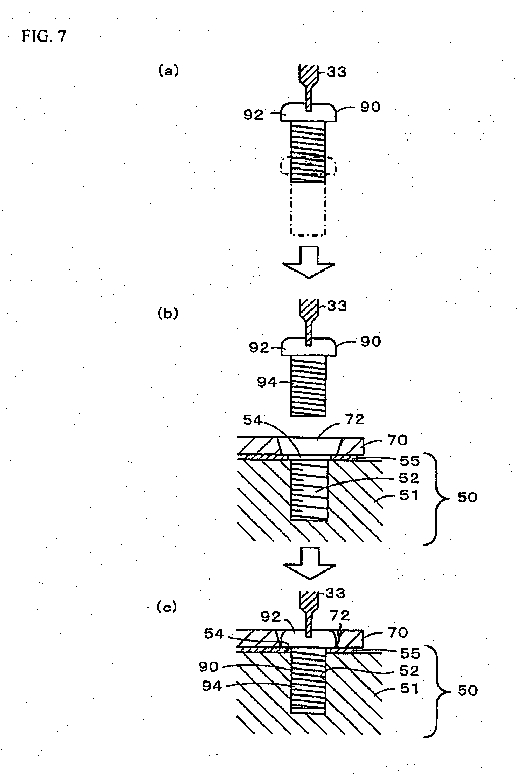

Here, the processes of steps S190, S200, in the case where the workpiece W is the workpiece 50 of FIG. 2 and the jig plate P, corresponding to the workpiece W, is the jig plate 70 of FIG. 3, will be described below. These processes are executed in a state in which the workpiece 50 is placed on the conveyor belt of the workpiece conveying device 40. FIGS. 6 and 7 are operation process diagrams of these processes. First, in step S190, the CPU 81 has the second camera 34 of the second arm 31 capture an image of the workpiece 50 from above the workpiece 50, and recognizes the positions of the two reference marks 56 provided on the bracket 55 of the workpiece 50 based on the image obtained by capturing the image. Subsequently, the CPU 81 has the first arm 21 position the jig plate 70 such that the two reference marks 76 of the jig plate 70 held by the first arm 21 coincide with the two reference marks 56 of the workpiece 50. As a result, the three guide holes 72 of the jig plate 70 are disposed directly above the three screw insertion holes 54 of the bracket 55 of the workpiece 50 and the screw holes 52 of the substrate 51 (see FIG. 6(a)). Subsequently, the CPU 81 lowers the jig plate 70 and presses down the bracket 55 of the workpiece 50 on the jig plate 70 (refer to FIG. 6(b)). Since the bracket 55 is a thin plate, a part of the bracket 55 may be lifted from the substrate 51 of the workpiece 50 conveyed to the work position (refer to FIG. 6(a)). Even in such a case, since the bracket 55 is pressed down on by the jig plate 70, the lifting is eliminated and the bracket 55 is brought into close contact with the substrate 51.

In step S200, the CPU 81 controls the second arm 31 and disposes the driver 33 of the screw fastening unit 32 at a screw supplying position to which a screw 90 of a type corresponding to the workpiece 50 is supplied. The head 92 of the screw 90 is then sucked to the tip of the driver 33 by a vacuum method (refer to FIG. 7(a)). The coordinates of the screw supplying position to which the screw 90 is supplied are included in the production-related information obtained in step S140. Subsequently, the CPU 81 has the second arm 31 position the foot 94 of the screw 90 sucked by the driver 33 so that the screw 90 axis aligns with axis of the guide hole 72 of the jig plate 70 (refer to FIG. 7(b)). Subsequently, the CPU 81 has the second arm 31 lower the driver 33. Then, the foot 94 of the screw 90 sucked by the driver 33 passes through the guide hole 72 of the jig plate 70 and the screw insertion hole 54 of the bracket 55, and reaches the screw hole 52 of the substrate 51. At this time, since the guide hole 72 is a tapered hole, the foot 94 of the screw 90 is led to the screw hole 52 as the screw 90 is guided by the side wall of the guide hole 72. Thereafter, the CPU 81 has the second arm 31 and the screw fastening unit 32 rotate the driver 33 and screw the foot 94 of the screw 90 into the screw hole 52 (refer to FIG. 7(c)). As a result, the bracket 55 of the workpiece 50 is fastened to the substrate 51 by the screw 90. After screwing is completed, the CPU 81 has the screw fastening unit 32 stop rotation of the driver 33 along with having the driver 33 release suction on the screw 90, and then has the second arm 31 retract the driver 33 upward. Further, the CPU 81 has the first arm 21 retract the jig plate 70 upward.

Returning to FIG. 5, after step S200, the CPU 81 has the workpiece conveying device 40 carry out the workpiece W, to which screw fastening has been completed, from the work position (step S210). Thereafter, the CPU 81 determines whether or not all screw fastening operations have been completed (step S220), and if the screw fastening operations remain, step S110 and subsequent processes are executed again. On the other hand, if all screw fastening operations have been completed in step S220, the CPU 81 terminates the routine.

Here, the correspondence between the constituent elements of the present embodiment and the constituent elements of the present invention will be clarified. The robotic arm control system 10 of the present embodiment corresponds to a robotic arm control system; the first arm 21 and the second arm 31 correspond to a first and second robotic arm, respectively; the first camera 24 and the CPU 81 correspond to information reading units; the jig plate table 60 corresponds to a jig plate seating unit; the HDD 83 corresponds to a storage unit; and the CPU 81 corresponds to a controller.

According to the robotic arm control system 10 described above, even if there are many types of workpieces W, the first arm 21 can automatically take out the jig plate P corresponding to the workpiece W from the jig plate table 60. Also, even in the case in which a part of the workpiece W may be lifted (for example, the workpiece 50 in FIG. 6(a)), the lifting can be prevented by pressing down on the workpiece W with a jig plate P that is compatible with the workpiece W. Consequently, working efficiency, when various types of workpieces W are pressed down on with a jig plate P, is improved.

If the type of the current jig plate P held by the first arm 21 does not correspond to the type of workpiece W being worked on, a jig plate P corresponding to the type of the workpiece W to be worked on is taken out from the jig plate table 60 after the current jig plate P is returned to the jig plate table 60. Therefore, it is possible to automatically replace the jig plate P with a jig plate P corresponding to the type of workpiece.

Further, the component 53 with the bracket 55 having the screw insertion hole 54 can be automatically screwed to the substrate 51 having the screw hole 52. Since the bracket 55 may be lifted from the substrate 51, the present invention is highly applicable.

Furthermore, the workpiece W is conveyed to the work position of the first arm 21 and the second arm 31 by the conveyor belt of the workpiece conveying device 40 and is worked on by the first arm 21 and the second arm 31 while on the conveyor belt. Therefore, workpieces W can be conveyed to the work position one after another by the conveyor belt. Further, since it is not necessary to lift the workpiece W, work efficiency increases.

It is to be understood that the present invention is not limited to the above-described embodiment and may be implemented in various modes provided they fall within the technical scope of the present invention.

For example, in the embodiment described above, the square hole of the jig plate P and the pair of fingers 23, 23 are used for engaging the jig plate P, but the invention is not particularly limited to this. For example, instead of the pair of fingers 23,23, a holder similar to a nozzle holder having an L-shaped notch disclosed in FIG. 6 of WO2015/111156 may be provided in the jig plate engaging unit 22. In this case, the jig plate P may be provided with a round hole instead of the square hole, wherein a pair of pins protruding in the radial direction of the hole may be provided so as to face each other and the pair of pins may be detachably engaged by a holder. Alternatively, the jig plate engaging unit 22 may detachably engage the jig plate P by excitation and demagnetization of an electromagnet.

In the embodiment described above, the workpiece W is conveyed to the conveyor belt of the workpiece conveying device 40, but the workpiece W may be conveyed by the conveyor belt of the workpiece conveying device 40 while on a workpiece holding plate. In this case, the two-dimensional bar code may be affixed to the workpiece W as described above, or may be affixed to the workpiece holding plate.

Although the two-dimensional bar code is used in the embodiment described above, a striped bar code or an RF tag in which ID information is embedded may be used.

In the embodiment described above, positioning of the workpiece W and the jig plate P is performed using the reference mark, but positioning may be performed mechanically. For example, an L-shaped wall may be provided so as to wall in one corner of the workpiece W, and positioning may be performed by abutting a corner of the jig plate P against the L-shaped wall. Alternatively, a convex portion may be provided at two or more positions on the upper surface of the workpiece W, a concave portion that fits with the convex portion may be provided on the lower surface of the jig plate P, and positioning may be performed by fitting the concave portion of the jig plate P to the convex portion of the workpiece W.

In the above-described embodiment, the work of screwing the substrate 51 of the workpiece 50 and the bracket 55 was used as an example, but the present invention is not particularly limited thereto. For example, the present invention may be applied to a workpiece in which the first arm 21 presses a workpiece having a female connector (insertion portion) with a jig plate, and the second arm 31 inserts a male connector (insertion member) into the female connector. Alternatively, the present invention may be applied to an operation in which the first arm 21 presses a workpiece having a slot (insertion portion) with a jig plate and the second robot 30 fits a component (insertion member) into the slot.

In the embodiment described above, the system controller 80 directly controls the operations of the first arm 21 and the second arm 31, but the present invention is not particularly limited thereto. For example, when the first robot 20 includes a first controller that controls operation of the first arm 21, the jig plate engaging unit 22, and the first camera 24, and the second robot 30 includes a second controller that controls operation of the second arm 31, the screw fastening unit 32, and the second camera 34, the system controller 80 may control operation of the first robotic arm 21 and the second robotic arm 31 through the first and second controllers while bidirectionally communicating with the first and second controllers.

### Industrial Applicability

The present invention can be applied to a device for automatically fastening screws, a device for automatically inserting a male connector into a female connector, and the like.

### Description of Reference Numerals

10 robotic arm control system, 20 first robot, 21 first arm, 22 jig plate engaging unit, 23 finger, 24 first camera, 30 second robot, 31 second arm, 32 screw fastening unit, 33 driver, 34 second camera, 40 workpiece transferring device, 50 workpiece, 51 substrate, 52 screw hole, 53 component, 54 screw insertion hole, 55 bracket, 56 reference mark, 58 two-dimensional bar code, 60 jig plate table, 70 jig plate, 72 guide hole, 73 tab, 74 square hole, 76 reference mark, 80 system controller, 81 CPU, 82 ROM, 83 HDD, 83T correspondence table, 84 RAM, 90 screw, 92 head, 94 foot, P jig plate, W workpiece.

## Claims

1. A robotic arm control system (10), comprising:
a first robotic arm (21) and a second robotic arm (31) for performing work on a workpiece (W) having insertion portions at predetermined positions;
and **characterized by**:
an information reading unit for reading information about the workpiece (W) or a workpiece type attached to a container on which the workpiece is placed;
a jig plate seating unit (60) for seating multiple types of jig plates (P);
a storage unit for storing a correspondence relationship between workpiece type and jig plate type, and
a controller (80) for controlling the first robotic arm and the second robotic arm,
wherein the controller controls the first robotic arm (21) to take out a jig plate (P) corresponding to the workpiece type read by the information reading unit from the jig plate seating unit, to place the jig plate (P) on the workpiece, and to press down on the workpiece (W) with the jig plate (P) so that positions of guide holes (72) provided in the jig plate coincide with positions of the insertion portions of the workpiece; and
the controller (80) controls the second robotic arm (31) to use the guide holes (72) of the jig plate, pressing down on the workpiece, for inserting insertion members into the insertion portions.

2. The robotic arm control system according to claim 1, wherein,
if the current jig plate type held by the first robotic arm (21) does not correspond to the workpiece type read by the information reading unit, the controller (80) controls the first robotic arm (21) to take out the jig plate (P) corresponding to the workpiece type from the jig plate seating unit (60) after returning the current jig plate to the jig plate seating unit.

3. The robotic arm control system according to claim 1 or 2, wherein
the workpiece (W) is a stacked body in which a first member (51) having first fastening holes (52) and a second member (55) having second fastening (54) holes are stacked so that the second fastening holes (54) are disposed directly above the first fastening holes (52) to constitute the insertion portions,
the insertion members are fasteners, and
the controller (80) controls the second robotic arm (31) to use the guide holes (72) of the jig plate (P) pressing down on the workpiece, for guiding the fasteners to the second fastening holes and the first fastening holes so as to fasten the second member and the first member together with the fasteners.

4. The robotic arm control system of claim 3, wherein
the fasteners are screws,
the first fastening holes (52) are screw holes with which the screws engage, and
the second fastening holes (54) are screw insertion holes having a size such that a foot of each screw is inserted with play but a head of each screw cannot be inserted.

5. The robotic arm control system according to any one of claims 1 to 4, wherein
the workpiece (W) is conveyed by a conveyor (40) to a work position of the first and second robotic arms (21,31) and is worked on by the first and second robotic arms (21,31) while the workpiece is on the conveyor.

## Patentansprüche

1. Roboterarm-Steuersystem (10), umfassend:
einen ersten Roboterarm (21) und einen zweiten Roboterarm (31) zum Ausführen einer Arbeit an einem Werkstück (W), das Einfügeabschnitte an vorbestimmten Positionen hat;
und **gekennzeichnet durch**:
eine Informationsleseeinheit zum Lesen von Informationen über das Werkstück (W) oder einen Werkstücktyp, die an einem Behälter angebracht ist, auf dem das Werkstück angeordnet ist;
eine Spannplatten-Aufsetzeinheit (60) zum Aufsetzen mehrerer Typen von Spannplatten (P);
eine Speichereinheit zum Speichern einer Entsprechungsbeziehung zwischen Werkstücktyp und Spannplattentyp; und
eine Steuereinheit (80) zum Steuern des ersten Roboterarms und des zweiten Roboterarms,
wobei die Steuereinheit den ersten Roboterarm (21) derart steuert, dass er eine Spannplatte (P) entsprechend dem Werkstücktyp, der von der Informationsleseeinheit gelesen wurde, aus der Spannplatten-Aufsetzeinheit entnimmt, um die Spannplatte (P) auf dem Werkstück zu plazieren, und einen Druck auf das Werkstück (W) mit der Spannplatte (P) derart ausübt, dass die Positionen der Führungslöcher (72), die in der Spannplatte vorgesehen sind, mit den Positionen der Einfügeabschnitte des Werkstücks übereinstimmen; und
die Steuereinheit (80) den zweiten Roboterarm (31) derart steuert, dass er die Führungslöcher (72) der Spannplatte verwendet, um unter Druckausübung auf das Werkstück die Einfügeelemente in die Einfügeabschnitte einzufügen.

2. Roboterarm-Steuersystem nach Anspruch 1, bei dem,
sofern der aktuelle Spannplattentyp, der von dem ersten Roboterarm (21) gehalten wird, nicht mit dem Werkstücktyp übereinstimmt, der von der Informationsleseeinheit gelesen wurde, die Steuereinheit (80) den ersten Roboterarm (21) derart steuert, dass er die Spannplatte (P) entsprechend dem Werkstücktyp aus der Spannplatten-Aufsetzeinheit (60) entnimmt, nachdem die aktuelle Spannplatte an die Spannplatten-Aufsetzeinheit zurückgegeben wurde.

3. Roboterarm-Steuersystem nach Anspruch 1 oder 2, bei dem
das Werkstück (W) ein gestapelter Körper ist, bei dem ein erstes Element (51), das erste Befestigungslöcher (52) hat, und ein zweites Element (55), das zweite Befestigungslöcher (54) hat, derart gestapelt sind, dass die zweiten Befestigungslöcher (54) direkt über den ersten Befestigungslöchern (52) angeordnet sind, um die Einfügeabschnitte zu bilden,
die Einfügeelemente Befestigungseinrichtungen sind, und
die Steuereinheit (80) den zweiten Roboterarm (31) derart steuert, dass er die Führungslöcher (72) der Spannplatte (P) unter Ausübung von Druck auf das Werkstück verwendet, um die Befestigungseinrichtungen zu den zweiten Befestigungslöchern und den ersten Befestigungslöchern zu leiten, um so das zweite Element und das erste Element zusammen mit den Befestigungseinrichtungen zu befestigen.

4. Roboterarm-Steuersystem nach Anspruch 3, bei dem
die Befestigungseinrichtungen Schrauben sind,
die ersten Befestigungslöcher (52) Schraubenlöcher sind, mit denen die Schrauben in Eingriff stehen, und
die zweiten Befestigungslöcher (54) Schraubeneinfügelöcher sind, deren Größe derart beschaffen ist, dass ein Fuß der Schraube mit Spiel eingefügt ist, jedoch der Kopf jeder Schraube nicht eingefügt werden kann.

5. Roboterarm-Steuersystem nach einem der Ansprüche 1 bis 4, bei dem das Werkstück (W) von einer Fördereinrichtung (40) zu einer Arbeitsposition des ersten und des zweiten Roboterarms (21, 31) befördert wird und von dem ersten sowie dem zweiten Roboterarm (21, 31) bearbeitet wird, während sich das Werkstück auf der Fördereinrichtung befindet.

## Revendications

1. Système de commande de bras de robot (10) comprenant :
un premier bras de robot (21) et un second bras de robot (31) destinés à effectuer un travail sur une pièce à usiner (W) comportant des organes d'insertion à des positions prédéterminées, et **caractérisé par** :
une unité de lecture d'informations destinée à lire des informations concernant la pièce à usiner (W) ou bien le type de pièce à usiner fixé à un contenant sur lequel est placée la pièce à usiner,
une unité d'accueil de plaques de gabarit (60) destinée à accueillir de multiples types de plaques de gabarit (P),
une unité de stockage destinée à stocker une relation de correspondance entre le type de pièce à usiner et le type de plaque de gabarit, et
un contrôleur (80) destiné à commander le premier bras de robot et le second bras de robot,
dans lequel le contrôleur commande le premier bras de robot (21) pour extraire une plaque de gabarit (P) correspondant au type de pièce à usiner lu par l'unité de lecture d'informations à partir de l'unité d'accueil de plaques de gabarit, dans le but de placer la plaque de gabarit (P) sur la pièce à usiner et de presser vers le bas sur la pièce à usiner (W) avec la plaque de gabarit (P) de sorte à ce que les positions de trous de guidage (72) ménagés dans la plaque de gabarit coïncident avec les positions des organes d'insertion de la pièce à usiner, et
le contrôleur (80) commande le second bras de robot (31) pour utiliser les trous de guidage (72) de la plaque de gabarit en pressant vers le bas sur la pièce à usiner dans le but d'insérer des éléments d'insertion dans les organes d'insertion.

2. Système de commande de bras de robot selon la revendication 1, dans lequel :
si la plaque de gabarit courante maintenue par le premier bras de robot (21) ne correspond pas au type de pièce à usiner lu par l'unité de lecture d'informations, le contrôleur (80) commande le premier bras de robot (21) pour extraire la plaque de gabarit (P) correspondant au type de pièce à usiner hors de l'unité d'accueil de plaques de gabarit (60) après avoir renvoyé la plaque de gabarit courante vers l'unité d'accueil de plaques de gabarit.

3. Système de commande de bras de robot selon la revendication 1 ou la revendication 2, dans lequel :
la pièce à usiner (W) est un corps d'empilement dans lequel sont empilés un premier élément (51) comportant des premiers trous de fixation (52) et un second élément (55) comportant des seconds trous de fixation (54) de sorte à ce que les seconds trous de fixation (54) soient disposés directement au-dessus des premiers trous de fixation (52) afin de constituer les organes d'insertion,
les éléments d'insertion sont des moyens d'assemblage, et
le contrôleur (80) commande le second bras de robot (31) pour utiliser les trous de guidage (72) de la plaque de gabarit (P) en pressant vers le bas sur la pièce à usiner dans le but de guider les moyens d'assemblage vers les seconds trous de fixation et les premiers trous de fixation de sorte à immobiliser le second élément est le premier élément ensemble avec les moyens d'assemblage.

4. Système de commande de bras de robot selon la revendication 3, dans lequel :
les moyens d'assemblage sont des vis,
les premiers trous de fixation (52) sont des trous de vis avec lesquels s'engrènent les vis, et
les seconds trous de fixation (54) sont des trous d'insertion de vis présentant une taille telle que le pied de chaque vis est inséré avec du jeu mais que la tête de chaque vis ne peut pas être insérée.

5. Système de commande de bras de robot selon l'une quelconque des revendications 1 à 4, dans lequel :
la pièce à usiner (W) est transportée par un convoyeur (40) jusqu'à une position d'usinage des premier et second bras de robot (21, 31) et elle est usinée par les premier et second bras de robot (21, 31) alors que la pièce à usiner se trouve sur le convoyeur.
